# EUROPEAN PATENT APPLICATION

(11) **EP 4 707 815 A1**
(43) Date of publication of application: **11.03.2026**
(21) Application number: 24862387.8
(22) Date of filing: 21.05.2024
(51) Int. Cl.: G01P 3/486, G01M 1/38

(54) **MEASUREMENT SYSTEM AND ROTATING BODY**

(30) Priority: 07.09.2023 JP 2023145228
(71) Applicant: IHI Corporation, Tokyo 135-8710 (JP)
(72) Inventor: SHIDA, Michinori, Tokyo 135-8710 (JP); TOKUE, Kazunori, Tokyo 135-8710 (JP)
(74) Representative: TBK
(86) International application number: PCT/JP2024/018714
(87) International publication number: WO 2025/052730

(57) **Abstract**

A measurement system according to an embodiment of the present disclosure includes: a rotating body; an optical sensor configured to irradiate a measurement surface of the rotating body with measurement light and receive reflected light of the measurement light from the measurement surface; and a measurement device configured to measure a rotational speed of the rotating body based on a change in a state of the reflected light reaching the optical sensor from the measurement surface. The measurement surface includes: a first measurement region configured to reflect the reflected light toward the optical sensor; and a second measurement region adjacent to the first measurement region in a circumferential direction of the rotational axis and configured to pass through an irradiation position of the measurement light on the measurement surface for each revolution of the rotating body about the rotational axis. The second measurement region includes a marking processed to reflect the reflected light, when the irradiation position is located in the second measurement region, in a direction different from a reflection direction of the reflected light, when the irradiation position is located in the first measurement region.

## Description

### Technical Field

The present disclosure relates to a measurement system and a rotating body.

### Background Art

Conventionally, various methods for measuring the rotational speed of a rotating body such as a turbocharger or a gas turbine are known (see, for example, Patent Literatures 1 to 3). For example, a method is known in which a nut attached to the rotational axis of a rotating body is magnetized and the change in magnetic flux caused by the rotation of the rotating body is measured by a magnetic sensor. In the method disclosed in Patent Literature 1, a through hole is formed, which extends straight through a rotational shaft and a hollow cap attached to the rotational shaft in the radial direction, and an optical sensor and a reflector are disposed on opposite sides of the through hole. The light reflected from the reflector is received by the optical sensor via the through hole, thereby measuring the rotational speed of the rotating body. In the method disclosed in Patent Literature 2, the rotational speed of the rotating body is measured by wireless communication between a wireless tag attached to the rotating body and a wireless tag reader/writer disposed at a position facing the wireless tag.

### Citation List

### Patent Literature

[Patent Literature 1] Japanese Unexamined Patent Publication No. 2005-207805
[Patent Literature 2] Japanese Unexamined Patent Publication No. 2010-025832
[Patent Literature 3] Japanese Unexamined Patent Publication No. 2018-044462

### Summary of Invention

### Technical Problem

The rotating bodies described above may have a component that is already strongly magnetized. In this case, taking into consideration the influence of magnetism on the rotating body, the rotational speed tends to be measured using a sensor other than a magnetic sensor. On the other hand, when configurations such as a hollow cap and a through hole are added to the rotational shaft of the rotating body as in the method of Patent Literature 1 that uses an optical sensor, the rotational balance of the rotating body tends to be disturbed, especially during high-speed rotation. The same applies when a wireless tag is added to the rotational shaft as in the method of Patent Literature 2 that uses wireless communication.

As another method for measuring the rotational speed using an optical sensor, there is a method in which black paint is applied to one location of the rotating body in the circumferential direction and the rotational speed is measured based on the change in intensity of the light reflected from the portion with black paint applied. In the case where such black paint is added to the rotating body, the rotational balance of the rotating body is less likely to be disturbed compared to the case where configurations such as a hollow cap and a through hole are added to the rotating body. However, black paint is typically applied manually to the rotating body, which may prevent the rotational speed of the rotating body from being accurately measured due to uneven application or the like.

The present disclosure describes a measurement system and a rotating body capable of accurately measuring the rotational speed of the rotating body while maintaining the rotational balance of the rotating body.

### Solution to Problem

A measurement system according to an embodiment of the present disclosure includes: a rotating body including a shaft rotatable about a rotational axis; an optical sensor disposed at a position facing a measurement surface being a portion of an outer surface of the rotating body, the optical sensor being configured to irradiate the measurement surface with measurement light and receive reflected light of the measurement light from the measurement surface; and a measurement device communicably connected to the optical sensor and configured to measure a rotational speed of the rotating body based on a change in a state of the reflected light reaching the optical sensor from the measurement surface. The measurement surface includes: a first measurement region configured to reflect the reflected light toward the optical sensor; and a second measurement region adjacent to the first measurement region in a circumferential direction of the rotational axis and configured to pass through an irradiation position of the measurement light on the measurement surface for each revolution of the rotating body about the rotational axis. The second measurement region includes a marking processed to reflect the reflected light, when the irradiation position is located in the second measurement region, in a direction different from a reflection direction of the reflected light, when the irradiation position is located in the first measurement region.

### Effects of Invention

The measurement system and the rotating body of the present disclosure are capable of accurately measuring the rotational speed of the rotating body while maintaining the rotational balance of the rotating body.

### Brief Description of Drawings

FIG. 1 is a diagram illustrating a configuration of a measurement system of an embodiment.
FIG. 2(a) is a partially enlarged side view of a rotating body in FIG. 1.
FIG. 2(b) is a front view illustrating the rotating body in FIG. 2(a).
FIG. 3(a) is a diagram illustrating the rotating body in FIG. 2(a) when a first measurement region is irradiated with measurement light. FIG. 3(b) is a diagram illustrating the rotating body in FIG. 2(a) when a second measurement region is irradiated with the measurement light.
FIG. 4(a) is a graph illustrating a measurement result of measuring the rotational speed of the rotating body in FIG. 1 by an optical sensor.
FIG. 4(b) is a graph illustrating, as a reference example, a measurement result of measuring the rotational speed of the rotating body in FIG. 1 by a magnetic sensor.
FIG. 5(a) is a partially enlarged side view of a rotating body according to Variation 1. FIG. 5(b) is a front view illustrating the rotating body in FIG. 5(a). FIG. 5(c) is a cross-sectional view of a boss portion taken along line A1-A1 in FIG. 5(a).
FIG. 6(a) is a diagram illustrating the rotating body in FIG. 5(a) when the first measurement region is irradiated with the measurement light.
FIG. 6(b) is a diagram illustrating the rotating body in FIG. 5(a) when the second measurement region is irradiated with the measurement light.
FIG. 7(a) is a graph illustrating a measurement result of measuring the rotational speed of the rotating body in FIG. 5(a) by an optical sensor.
FIG. 7(b) is a graph illustrating, as a reference example, a measurement result of measuring the rotational speed of the rotating body in FIG. 5(a) by a magnetic sensor.
FIG. 8 is a diagram illustrating a configuration of a measurement system including a rotating body of Variation 2.
FIG. 9 is a diagram illustrating a configuration of a measurement system including a rotating body of Variation 3.
FIG. 10(a) is a diagram illustrating the rotating body in FIG. 9 when the first measurement region of a shaft end surface is irradiated with the measurement light. FIG. 10(b) is a diagram illustrating the rotating body in FIG. 9 when the second measurement region of the shaft end surface is irradiated with the measurement light.
FIG. 11 is a diagram illustrating a configuration of a measurement system including a rotating body of Variation 4.

### Description of Embodiments

A measurement system according to an embodiment of the present disclosure includes: a rotating body including a shaft rotatable about a rotational axis; an optical sensor disposed at a position facing a measurement surface being a portion of an outer surface of the rotating body, the optical sensor being configured to irradiate the measurement surface with measurement light and receive reflected light of the measurement light from the measurement surface; and a measurement device communicably connected to the optical sensor and configured to measure a rotational speed of the rotating body based on a change in a state of the reflected light reaching the optical sensor from the measurement surface. The measurement surface includes: a first measurement region configured to reflect the reflected light toward the optical sensor; and a second measurement region adjacent to the first measurement region in a circumferential direction of the rotational axis and configured to pass through an irradiation position of the measurement light on the measurement surface for each revolution of the rotating body about the rotational axis. The second measurement region includes a marking processed to reflect the reflected light, when the irradiation position is located in the second measurement region, in a direction different from a reflection direction of the reflected light, when the irradiation position is located in the first measurement region.

In the above measurement system, the second measurement region on the measurement surface of the rotating body includes the marking processed to reflect the reflected light, when the irradiation position irradiated with the measurement light is located in the second measurement region, in a direction different from the reflection direction of the reflected light, when the irradiation position is located in the first measurement region. In this case, the reflected light from the irradiation position in the second measurement region can be reflected in a direction different from that of the optical sensor. As a result, the amount of the reflected light that reaches the optical sensor from the irradiation position, when the irradiation position is located in the second measurement region, is smaller than the amount of the reflected light that reaches the optical sensor from the irradiation position, when the irradiation position is located in the first measurement region. Therefore, the amount of the reflected light that the optical sensor receives is smaller when the marking in the second measurement region passes through the irradiation position with the rotation of the rotating body. The rotational speed of the rotating body can be measured based on this change in the amount of the reflected light. In the case where the rotating body includes the marking processed as described above, the rotational balance of the rotating body is less likely to be disturbed compared to a case where a component for measuring the rotational speed is separately added to the rotating body. Furthermore, the marking processed as described above can be formed uniformly and accurately on the measurement surface by machining. Accordingly, unlike in a case where black paint is applied manually to the rotating body, the risk that the rotational speed of the rotating body cannot be measured accurately due to uneven application or the like can be reduced. Therefore, the above measurement system is capable of accurately measuring the rotational speed of the rotating body while maintaining the rotational balance of the rotating body.

In some aspects, the marking may be a textured portion provided with surface texturing to diffusely reflect the reflected light. In this case, the marking can be formed on the rotating body by laser processing in which the measurement surface of the rotating body is irradiated with laser light. In the case where the marking is formed on the rotating body by laser processing, the rotational balance of the rotating body is less likely to be disturbed compared to a case where the marking is formed on the rotating body by a cutting process that removes a portion of the measurement surface of the rotating body.

In some aspects, the marking may be an inclined surface extending in a direction different from a direction in which the first measurement region extends in a cross-section including the rotational axis. In this case, the marking can be easily formed on the rotating body by a simple operation of chamfering a portion of the measurement surface of the rotating body.

In some aspects, the optical sensor may be a laser sensor configured to irradiate the irradiation position with laser light as the measurement light. In the case where a laser sensor is used as the optical sensor, the distance between the optical sensor and the rotating body can be increased compared to a case where a proximity sensor is used as the optical sensor. Thus, the risk of interference with other components caused by the optical sensor being brought too close to the rotating body can be reduced. As a result, it is possible to avoid increased complexity in the system configuration that would otherwise be required to avoid interference between the optical sensor and other components.

In some aspects, the rotating body may further include an impeller attached to the shaft. The measurement surface may be a portion of an outer surface of the impeller. The impeller is typically formed of a material which can be easily processed compared to other components such as the shaft. Therefore, the marking can be easily formed through processing on the impeller. Furthermore, unlike the shaft, the impeller is a component that can be removed from the rotating body and replaced, which thereby facilitates corrections and the like of the marking. Furthermore, in the case where the marking is formed on the impeller, the influence of the marking on the rotational balance of the rotating body can be reduced compared to a case where the marking is formed on the shaft. Furthermore, the impeller tends to be a portion for correcting the rotational balance of the rotating body, and such correction is performed by machining using a chuck mechanism or the like. In the case where the marking is formed on the impeller, the positional relationship between a correction position of the impeller and a formation position of the marking can be collectively detected by a machine. As a result, the correction of the impeller and the formation of the marking can be easily performed by a machine.

In some aspects, the impeller may include: a boss portion having a cylindrical shape and through which the shaft extends; a hub portion extending from the boss portion along a radial direction and the circumferential direction of the rotational axis; and a plurality of blade portions rising from the hub portion. The boss portion may include a boss outer peripheral surface extending along the circumferential direction. The measurement surface may be the boss outer peripheral surface. In this case, the measurement light can be easily irradiated toward the measurement surface from a direction intersecting the rotational axis. Furthermore, since the boss portion has a lower risk of damage during high-speed rotation than the plurality of blade portions formed on the hub portion, the marking can be reliably maintained on the measurement surface.

In some aspects, the marking may be formed on the boss outer peripheral surface at a position spaced apart from a boundary between the boss portion and the hub portion. In this case, the risk of the plurality of blade portions formed on the hub portion being erroneously irradiated with the measurement light from the optical sensor can be reduced. Furthermore, in this case, even when the optical sensor is disposed at a position close to the measurement surface, the risk of the optical sensor interfering with the plurality of blade portions of the hub portion can be reduced.

A rotating body according to another embodiment of the present disclosure includes a shaft rotatable about a rotational axis. In the rotating body, a measurement surface being a portion of an outer surface of the rotating body is configured to be irradiated with measurement light from an optical sensor, wherein the measurement surface includes: a first measurement region configured to reflect the measurement light toward the optical sensor; and a second measurement region adjacent to the first measurement region in a circumferential direction of the rotational axis and configured to pass through an irradiation position of the measurement light on the measurement surface for each revolution of the rotating body about the rotational axis. The second measurement region includes a marking processed to reflect the reflected light, when the irradiation position is located in the second measurement region, in a direction different from a reflection direction of the reflected light, when the irradiation position is located in the first measurement region. This rotating body has the same features as those of the rotating body of the above measurement system, and is thus capable of producing similar operations and effects as those described above.

The measurement system and the rotating body of the present disclosure will be described in detail below with reference to the accompanying drawings. Same reference signs are given to the same elements in the description of the drawings, and redundant description will be omitted.

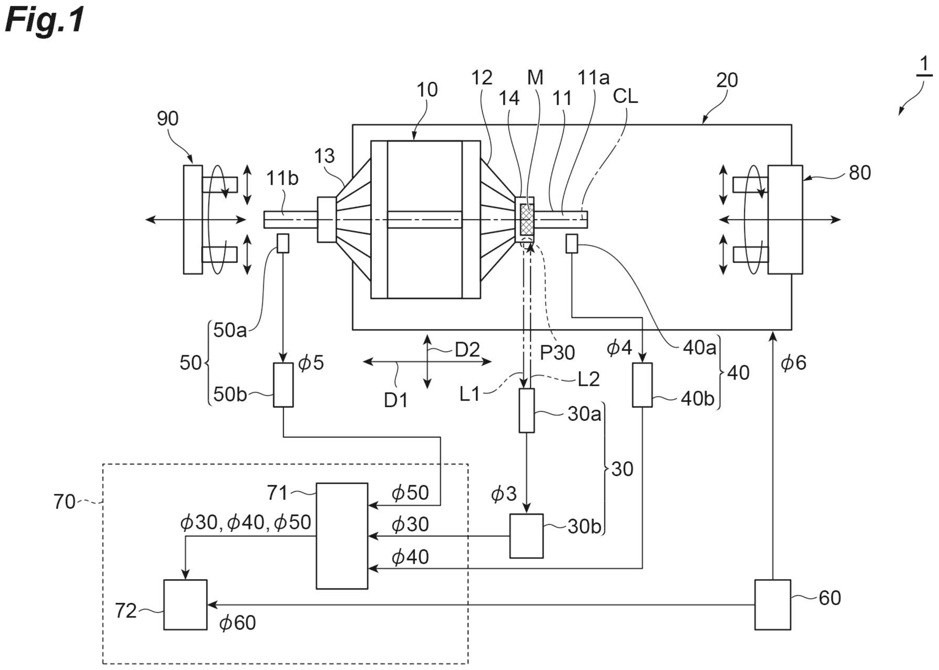

A measurement system 1 illustrated in FIG. 1 measures the rotational speed of a rotating body 10 that rotates about a rotational axis CL. The measurement system 1 includes, for example, the rotating body 10, an inverter 20, a rotation sensor 30 (optical sensor), a first vibration sensor 40, a second vibration sensor 50, a control device 60, and a measurement device 70.

The rotating body 10 is, for example, a constituent component of a turbocharger. The turbocharger is, for example, applied to an internal combustion engine of a vehicle. The rotating body 10 includes, for example, a shaft 11, a first impeller 12, and a second impeller 13. The shaft 11 is, for example, a cylindrical component that takes the rotational axis CL as a central axis. The shaft 11 extends along an axial direction D1 in which the rotational axis CL extends. The shaft 11 is rotatably supported about the rotational axis CL by a bearing. The first impeller 12 is attached to a first end portion 11a of the shaft 11. The second impeller 13 is attached to a second end portion 11b of the shaft 11. The second impeller 13 has a shape corresponding to that of the first impeller 12.

The inverter 20 is electrically connected to the rotating body 10. The inverter 20 is, for example, integrated with the rotating body 10. The inverter 20 supplies driving power for rotating the rotating body 10 to the rotating body 10. A publicly known circuit may be used for the circuit of the inverter 20.

The rotation sensor 30 is, for example, disposed at a position facing an outer surface of the rotating body 10 in a radial direction D2 of the rotational axis CL. The rotation sensor 30 is an optical sensor that irradiates an irradiation position P30 on the outer surface of the rotating body 10 with measurement light L1 and receives reflected light L2 from the irradiation position P30 to detect the amount of the reflected light L2. This embodiment exemplifies a case where the rotation sensor 30 is a laser sensor that emits laser light as the measurement light L1. The rotation sensor 30 includes, for example, a sensor head 30a that irradiates the irradiation position P30 with the measurement light L1 and acquires the amount of the reflected light L2 as an electrical signal φ3, and a sensor amplifier 30b that amplifies the electrical signal φ3 of the sensor head 30a. The rotation sensor 30 transmits an electrical signal φ30 amplified by the sensor amplifier 30b to the measurement device 70 as a detection result indicating the amount of the reflected light L2. The distance in the radial direction D2 from the rotation sensor 30 to the irradiation position P30, that is, a detection distance of the rotation sensor 30 is, for example, in the range of 200 mm to 300 mm.

The first vibration sensor 40 is, for example, disposed at a position facing the first end portion 11a of the shaft 11 of the rotating body 10 in the radial direction D2. The first vibration sensor 40 is, for example, a displacement sensor that detects the displacement of the rotating body 10 in a vertical direction from changes in the eddy current generated at the first end portion 11a of the shaft 11 by electromagnetic induction due to a high-frequency magnetic field. The first vibration sensor 40 includes, for example, a sensor head 40a that generates a high-frequency magnetic field in the vicinity of the first end portion 11a and acquires the displacement of the rotating body 10 as an electrical signal φ4, and a sensor amplifier 40b that amplifies the electrical signal φ4 of the sensor head 40a. The first vibration sensor 40 transmits an electrical signal φ40 from the sensor amplifier 40b to the measurement device 70 as a detection result indicating the vibration of the rotating body 10 in the vertical direction. The distance in the radial direction D2 from the first vibration sensor 40 to the first end portion 11a, that is, a detection distance of the first vibration sensor 40 is, for example, in the range of greater than 0 µm to 500 µm. The detection distance of the first vibration sensor 40 may be in the range of 50 µm to 500 µm, or 250 µm to 500 µm. The first vibration sensor 40 may be another sensor such as an optical sensor, an acceleration sensor, or a speed sensor, as long as the vibration of the rotating body 10 can be detected.

The second vibration sensor 50 is, for example, disposed at a position facing the second end portion 11b of the shaft 11 of the rotating body 10 in the radial direction D2. The second vibration sensor 50 is, for example, a displacement sensor that detects the displacement of the rotating body 10 in the vertical direction from changes in the eddy current generated at the second end portion 11b of the shaft 11 by electromagnetic induction due to a high-frequency magnetic field. The second vibration sensor 50 includes, for example, a sensor head 50a that generates a high-frequency magnetic field in the vicinity of the second end portion 11b and acquires the displacement of the rotating body 10 as an electrical signal φ5, and a sensor amplifier 50b that amplifies the electrical signal φ5 of the sensor head 50a. The second vibration sensor 50 transmits an electrical signal φ50 from the sensor amplifier 50b to the measurement device 70 as a detection result indicating the vibration of the rotating body 10 in the vertical direction. The distance in the radial direction D2 from the second vibration sensor 50 to the second end portion 11b, that is, a detection distance of the second vibration sensor 50 is, for example, in the range of greater than 0 µm to 500 µm. The detection distance of the second vibration sensor 50 may be in the range of 50 µm to 500 µm, or 250 µm to 500 µm. The second vibration sensor 50 may be another sensor such as an optical sensor, an acceleration sensor, or a speed sensor, as long as the vibration of the rotating body 10 can be detected.

The control device 60 and the measurement device 70 are physically computers. The control device 60 and the measurement device 70 are, for example, each formed as separate computers. The control device 60 and the measurement device 70 may be formed as a single computer. The computer that forms the control device 60 and the measurement device 70 includes, for example, one or more CPUs (processors), a main storage device (memory) such as RAM and ROM, a communication module which is a data transceiver device that transmits and receives data with an external device, and an auxiliary storage device such as a semiconductor memory and a hard disk drive. Each function of the control device 60 and the measurement device 70 is implemented by loading one or more pieces of predetermined computer software into hardware such as the CPU and RAM to operate the communication module under the control of the CPU, and reading and writing data in the RAM or the auxiliary storage device.

The control device 60 is communicably connected to the inverter 20 and the measurement device 70 by wire or wirelessly. The control device 60 transmits a control signal φ6 for controlling the operation of the inverter 20 to the inverter 20. The control device 60 transmits an instruction signal φ60 for instructing the measurement device 70 on the timing of the measurement processing and the like to the measurement device 70.

The measurement device 70 is communicably connected to the rotation sensor 30, the first vibration sensor 40, the second vibration sensor 50, and the control device 60 by wire or wirelessly. The measurement device 70 measures the rotational speed of the rotating body 10 using the electrical signal φ30 from the rotation sensor 30 in response to the instruction signal φ60 from the control device 60. The measurement device 70 measures the vibration characteristics of the rotating body 10 using the electrical signal φ40 from the first vibration sensor 40 and the electrical signal φ50 from the second vibration sensor 50 in response to the instruction signal φ60 from the control device 60.

The measurement device 70 includes, for example, a signal input portion 71 and a calculation portion 72, as functional components. The signal input portion 71 receives the electrical signals φ30, φ40, and φ50 from the rotation sensor 30, the first vibration sensor 40, and the second vibration sensor 50. The signal input portion 71, for example, samples the electrical signal φ30 from the rotation sensor 30 in synchronization with the electrical signals φ40 and φ50 from the first vibration sensor 40 and the second vibration sensor 50. The signal input portion 71 distinguishes between the electrical signals φ30, φ40, and φ50 and outputs them to calculation portion 72. The calculation portion 72 calculates the rotational speed of the rotating body 10 using the electrical signal φ30 from the signal input portion 71. The calculation portion 72 calculates the vibration characteristics of the rotating body 10 using the electrical signals φ40 and φ50 from the signal input portion 71. The specific method for measuring the rotational speed of the rotating body 10 by the calculation portion 72 will be described further below.

In a case where a correction processing for correcting the rotational balance of the rotating body 10 is performed on the outer surface of the rotating body 10, a first chuck mechanism 80 and a second chuck mechanism 90 are used. The first chuck mechanism 80 and the second chuck mechanism 90 are formed movable along the axial direction D1. The first chuck mechanism 80 is disposed at a position facing the first end portion 11a of the shaft 11 in the axial direction D1. The first chuck mechanism 80 holds an outer peripheral surface of a portion to be processed of the rotating body 10 from the first end portion 11a side. The outer peripheral surface of the portion to be processed is corrected by rotating the first chuck mechanism 80. The second chuck mechanism 90 holds the outer peripheral surface of the portion to be processed of the rotating body 10 from the second end portion 11b side. The outer peripheral surface of the portion to be processed is corrected by rotating the second chuck mechanism 90. In the case where the correction processing by the first chuck mechanism 80 and the second chuck mechanism 90 is performed, the first vibration sensor 40 and the second vibration sensor 50 can be retracted so as not to interfere with the first chuck mechanism 80 and the second chuck mechanism 90.

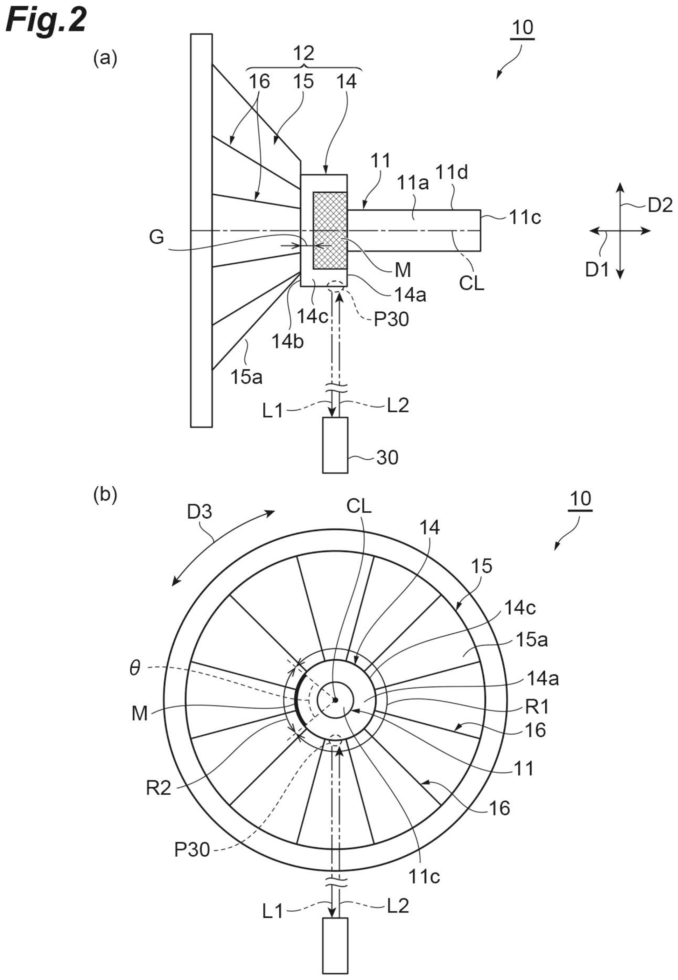

The configuration of the rotating body 10 will be described in further detail with reference to FIGS. 2(a) and 2(b). FIGS. 2(a) and 2(b) illustrate the configuration of the rotating body 10 in the vicinity of the first impeller 12. The second impeller 13 has the same configuration as the first impeller 12 with the exception that a marking M described further below is not formed. Accordingly, the second impeller 13 can be described in the same manner as the first impeller 12 except for the marking M, and thus, detailed description of the second impeller 13 will be omitted. The marking M may be formed on the second impeller 13 instead of on the first impeller 12, or may be formed on both the first impeller 12 and the second impeller 13.

As illustrated in FIGS. 2(a) and 2(b), the shaft 11 includes, for example, a shaft end surface 11c and a shaft outer peripheral surface 11d. The shaft end surface 11c is a circular end surface positioned at one end of the shaft 11 in the axial direction D1. The shaft end surface 11c has, for example, a diameter of 4 mm to 6 mm. The shaft outer peripheral surface 11d is an outer peripheral surface of the shaft 11 that extends along the rotational axis CL in a circumferential direction D3. The shaft outer peripheral surface 11d extends in the axial direction D1 from the shaft end surface 11c. The shaft outer peripheral surface 11d is, for example, a circumferential surface about the rotational axis CL.

The first impeller 12 includes, for example, a boss portion 14, a hub portion 15, and a plurality of blade portions 16. The boss portion 14 has, for example, a cylindrical shape about the rotational axis CL. The shaft 11 extends through the interior of the boss portion 14 in the axial direction D1. The shaft end surface 11c protrudes from the boss portion 14 in the axial direction D1. The boss portion 14 includes, for example, a first boss end surface 14a, a second boss end surface 14b, and a boss outer peripheral surface 14c (measurement surface). The first boss end surface 14a and the second boss end surface 14b are aligned along the axial direction D1. The shaft end surface 11c protrudes from the first boss end surface 14a. The boss outer peripheral surface 14c is an outer peripheral surface of the boss portion 14 that extends along the circumferential direction D3. The boss outer peripheral surface 14c connects the first boss end surface 14a and the second boss end surface 14b in the axial direction D1. The boss outer peripheral surface 14c is, for example, a circumferential surface about the rotational axis CL. The boss outer peripheral surface 14c has, for example, a diameter of 18 mm to 20 mm.

The hub portion 15 is disposed on the side of the boss portion 14 opposite to the shaft end surface 11c in the axial direction D1. The hub portion 15 is connected to the second boss end surface 14b of the boss portion 14 in the axial direction D1. The hub portion 15 includes a hub surface 15a that extends from the second boss end surface 14b in a direction inclined with respect to the axial direction D1 and the radial direction D2. The plurality of blade portions 16 rise from the hub surface 15a. The plurality of blade portions 16 are arranged at predetermined intervals along the circumferential direction D3.

In this embodiment, the boss outer peripheral surface 14c is formed as a measurement surface that is irradiated with the measurement light L1 for measuring the rotational speed of the rotating body 10. The rotation sensor 30 that emits the measurement light L1 is disposed at a position facing the boss outer peripheral surface 14c in the radial direction D2. The rotation sensor 30 irradiates the measurement light L1 toward the boss outer peripheral surface 14c in the radial direction D2. An optical axis direction of the rotation sensor 30, for example, coincides with the radial direction D2. The irradiation position P30 that is irradiated with the measurement light L1 from the rotation sensor 30 is set on the boss outer peripheral surface 14c. The irradiation position P30 indicates the position of an irradiation spot of the measurement light L1 on the boss outer peripheral surface 14c. The irradiation position P30 is set at a location that remains stationary without rotation relative to the rotating body 10 that rotates about the rotational axis CL. The irradiation spot of the measurement light L1 on the boss outer peripheral surface 14c has, for example, a diameter of less than 1 mm.

The shaft end surface 11c, the shaft outer peripheral surface 11d, the first boss end surface 14a, the second boss end surface 14b, the boss outer peripheral surface 14c, and the hub surface 15a described above form the outer surface of the rotating body 10. Among these surfaces, the first boss end surface 14a, the second boss end surface 14b, the boss outer peripheral surface 14c, and the hub surface 15a form an outer surface of the first impeller 12.

As illustrated in FIG. 2(b), the boss outer peripheral surface 14c includes a first measurement region R1 and a second measurement region R2 which are adjacent to each other along the circumferential direction D3. The second measurement region R2 is a portion of the boss outer peripheral surface 14c along the circumferential direction D3. The marking M is formed on the second measurement region R2 as a rotational reference for measuring the rotational speed of the rotating body 10. The marking M rotates about the rotational axis CL together with the rotating body 10. The marking M passes through the irradiation position P30 for each revolution of the rotating body 10. The marking M changes the state of the reflected light L2 that is reflected at the irradiation position P30 and reaches the rotation sensor 30. The change in the state of the reflected light L2 is, for example, a change in the amount of the reflected light L2 or a change in the intensity of the reflected light L2.

The marking M is a region that is processed to reflect the reflected light L2 from the irradiation position P30, when the irradiation position P30 is located in the second measurement region R2, in a direction different from a reflection direction of the reflected light L2, when the irradiation position P30 is located in the first measurement region R1. The marking M reduces the amount of the reflected light L2 that reaches the rotation sensor 30. The processing applied to the marking M is a predetermined surface treatment performed on the second measurement region R2. Surface treatment refers, for example, to laser processing or a cutting process performed using a machine. Through such machining, a reflective surface having a normal direction different from the reflection direction of the reflected light L2 from the irradiation position P30 in the first measurement region R1 is formed on the marking M.

The marking M is, for example, a textured portion formed by a laser marker. The marking M is a portion where the state of the boss outer peripheral surface 14c has changed due to irradiation with laser light. The marking M is formed by performing laser processing in which the boss outer peripheral surface 14c is irradiated with laser light. As a result of the change in the state of the boss outer peripheral surface 14c due to the irradiation with laser light, the marking M is provided with fine surface texturing by the irradiation with laser light. The surface texturing formed on the marking M at least includes the reflective surface having a normal direction different from the reflection direction of the reflected light L2 from the irradiation position P30 in the first measurement region R1. The marking M is formed to reflect the reflected light L2 from the irradiation position P30, when the irradiation position P30 is located in the second measurement region R2, in a direction different from the reflection direction of the reflected light L2, when the irradiation position P30 is located in the first measurement region R1.

In contrast, the first measurement region R1 is a portion of the boss outer peripheral surface 14c other than the second measurement region R2. No marking M is formed in the first measurement region R1. Accordingly, the first measurement region R1 is formed as the boss outer peripheral surface 14c that is smooth and on which no machining such as laser processing is performed.

As illustrated in FIG. 2(a), the marking M formed in the second measurement region R2 has a rectangular shape extending along the circumferential direction D3 of the rotational axis CL (see FIG. 2(b)), when the rotating body 10 is viewed in the radial direction D2 perpendicular to the rotational axis CL. The marking M is formed, for example, on the boss outer peripheral surface 14c at a position spaced apart from the boundary between the hub portion 15 and the boss portion 14 in the axial direction D1. That is, the marking M is formed at a position shifted from the second boss end surface 14b that is in contact with the hub portion 15 toward the first boss end surface 14a in the axial direction D1. As a result, a space G is formed between the second boss end surface 14b and the marking M in the axial direction D1. The marking M is, for example, in contact with the first boss end surface 14a on the side opposite to the hub portion 15.

Taking into consideration that the diameter of the irradiation spot of the measurement light L1 is, for example, less than 1 mm, the marking M may have a width in the axial direction D1 of, for example, 1 mm to 2 mm. As illustrated in FIG. 2(b), the marking M is formed on the boss outer peripheral surface 14c in the range of an angle θ about the rotational axis CL, when the rotating body 10 is viewed in the axial direction D1. The angle θ may, for example, be 60 degrees.

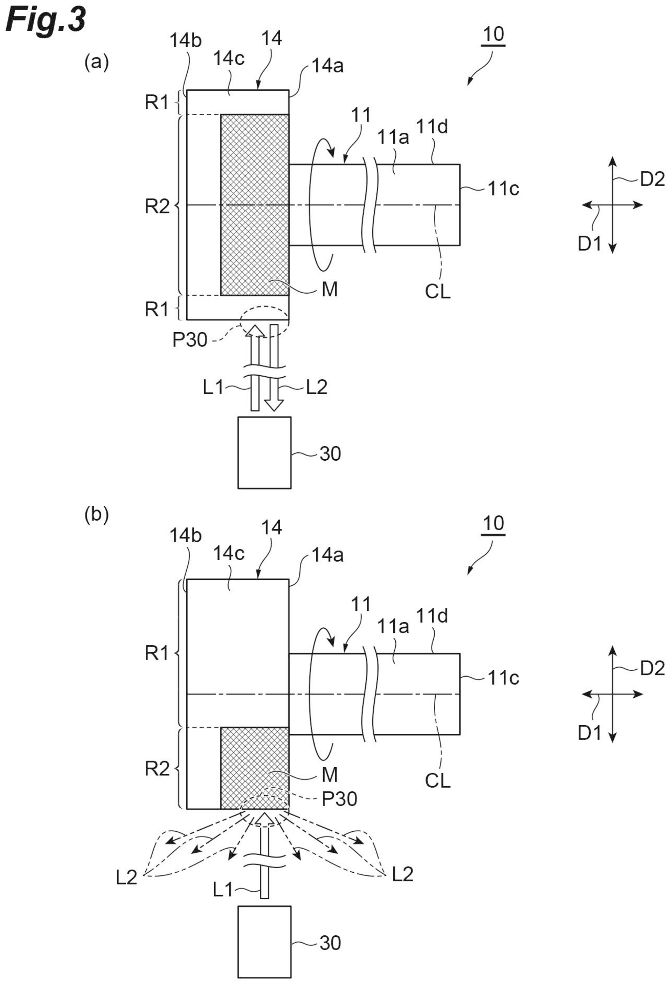

As illustrated in FIG. 3(a), when the irradiation position P30 is located in the first measurement region R1 formed as the smooth boss outer peripheral surface 14c, the normal direction of the first measurement region R1 at the irradiation position P30 coincides with the optical axis direction of the rotation sensor 30. Accordingly, the measurement light L1 irradiated onto the irradiation position P30 in the first measurement region R1 along the radial direction D2 from the rotation sensor 30 is reflected from the irradiation position P30 toward the rotation sensor 30 along the radial direction D2. That is, the reflection direction of the reflected light L2 in the first measurement region R1 coincides with an irradiation direction of the measurement light L1 from the rotation sensor 30. The reflection direction of the reflected light L2 may be the optical axis direction of the reflected light L2. The irradiation direction of the measurement light L1 may be the optical axis direction of the measurement light L1.

In contrast, fine surface texturing that diffusely reflects the measurement light L1 is formed in the second measurement region R2 in which the marking M is formed. Thus, the normal direction of the second measurement region R2 at the irradiation position P30 differs depending on the position in the second measurement region R2. The second measurement region R2 has a plurality of normal directions different from the optical axis direction of the rotation sensor 30 at the irradiation position P30. Accordingly, as illustrated in FIG. 3(b), most of the measurement light L1 irradiated onto the irradiation position P30 in the second measurement region R2 from the rotation sensor 30 along the radial direction D2 is reflected in directions different from the optical axis direction of the rotation sensor 30 at the irradiation position P30 in the second measurement region R2. That is, the reflection directions of most of the reflected light L2 in the second measurement region R2 differ from the irradiation direction of the measurement light L1 from the rotation sensor 30.

The marking M, thus, reflects the reflected light L2 from the irradiation position P30, when the irradiation position P30 is located in the second measurement region R2, in directions different from the reflection direction of the reflected light L2, when the irradiation position P30 is located in the first measurement region R1. The reflection direction of the reflected light L2, when the irradiation position P30 is located in the first measurement region R1, may be the normal direction of the first measurement region R1 at the irradiation position P30, that is, the radial direction D2. In contrast, the reflected light L2 from the irradiation position P30, when the irradiation position P30 is located in the second measurement region R2, is dispersed in a plurality of directions as illustrated in FIG. 3(b). At this time, most of the reflected light L2 is reflected in directions different from the radial direction D2 toward the rotation sensor 30. As a result, at least the amount of the reflected light L2 directed toward the rotation sensor 30 along the radial direction D2 is smaller than the amount of the reflected light L2, when the irradiation position P30 is located in the first measurement region R1.

Accordingly, reflecting the reflected light L2 from the irradiation position P30, when the irradiation position P30 is located in the second measurement region R2, in directions different from the reflection direction of the reflected light L2, when the irradiation position P30 is located in the first measurement region R1, means that, with the reflection direction of the reflected light L2 from the irradiation position P30 in the first measurement region R1 taken as a reference direction, the reflection directions of part or all of the reflected light L2 from the irradiation position P30 in the second measurement region R2 are made different from the reference direction such that the amount of the reflected light L2 directed toward the rotation sensor 30 from the irradiation position P30 in the second measurement region R2 along the reference direction is smaller than the amount of the reflected light L2 directed toward the rotation sensor 30 along the reference direction.

In this way, since most of the reflected light L2 reflected by the marking M is reflected in directions different from the radial direction D2 in which the rotation sensor 30 is located, the amount of the reflected light L2 that reaches the rotation sensor 30 from the irradiation position P30, when the irradiation position P30 is located in the second measurement region R2, is smaller than the amount of the reflected light L2 that reaches the rotation sensor 30 from the irradiation position P30, when the irradiation position P30 is located in the first measurement region R1. Thus, the marking M formed in the second measurement region R2 changes the amount of the reflected light L2 by reducing the amount of the reflected light L2 that reaches the rotation sensor 30.

The rotation sensor 30 outputs an electrical signal having a magnitude corresponding to the amount of the reflected light L2 from the irradiation position P30. The electrical signal may, for example, be a voltage value or a current value. The magnitude of the electrical signal increases as the amount of the reflected light L2 increases. As described above, when the irradiation position P30 is located in the second measurement region R2, the marking M reduces the amount of the reflected light L2 that reaches the rotation sensor 30. Consequently, the magnitude of the electrical signal that the rotation sensor 30 outputs, when the irradiation position P30 is located in the second measurement region R2, is smaller than the magnitude of the electrical signal that the rotation sensor 30 outputs, when the irradiation position P30 is located in the first measurement region R1. As a result, the magnitude of the electrical signal output from the rotation sensor 30 is smaller when the second measurement region R2 passes through the irradiation position P30.

The measurement device 70 measures the rotational speed of the rotating body 10 based on this change in the magnitude of the electrical signal. Specifically, the calculation portion 72 of the measurement device 70 determines whether the magnitude of the electrical signal output from the rotation sensor 30 is smaller than a predetermined threshold. The calculation portion 72 determines that the rotating body 10 has made one revolution when it determines that the magnitude of the electrical signal is smaller than the threshold. For example, the calculation portion 72 calculates the rotational speed of the rotating body 10 by calculating the rotational period by the number of sampling points per revolution. The rotational speed calculation method by the measurement device 70 is not limited to the above calculation method, and may be any other calculation method. For example, the calculation portion 72 may calculate the rotational speed of the rotating body 10 by counting the number of revolutions of the rotating body 10 per unit time.

The operation and effects of the measurement system 1 and the rotating body 10 of the present embodiment will be described below together with the conventional problems. Conventionally, various methods for measuring the rotational speed of a rotating body such as a turbocharger or a gas turbine are known. For example, a method for measuring the rotational speed of a rotating body using a magnetic sensor is known. However, the rotor of the rotating body may be strongly magnetized, in which case the use of a magnetic sensor tends to be avoided. In the case where the rotational speed of a rotating body is measured using a magnetic sensor, the change in magnetic flux when the rotating body is rotated is detected with a portion of the rotating body being magnetized. A process such as pulsing may be necessary for the signal output from the magnetic sensor. Thus, when using a magnetic sensor, it is required to provide a design dedicated to the object to be detected by the magnetic sensor. Therefore, in the method using a magnetic sensor, there is a problem that a general-purpose sensor cannot be used.

On the other hand, as a sensor other than the magnetic sensor, basically, a commercially available one may be used as is. In this case, a new design for the sensor is unnecessary. However, for example, in a method of measuring the rotational speed of a rotating body using an optical sensor, a component for measurement such as a reflector may be separately attached to the rotating body. Such a component may have a significant influence on the rotational balance of the rotating body. For example, in the case where such a component is attached to the rotating body, there is a risk that it may not be possible to rotate the rotating body at high speed in consideration of a disturbance in the rotational balance. As another method for measuring the rotational speed using an optical sensor, there is a method in which black paint is applied to one location of the rotating body in the circumferential direction and the rotational speed is measured based on the change in the intensity of the reflected light from the portion with black paint applied. In this method, the amount of the reflected light from the black paint is reduced by part of the measurement light from the optical sensor being absorbed by the black paint. Therefore, the amount of the reflected light is smaller when the black paint passes through the irradiation position of the measurement light. The rotational speed of the rotating body can be measured by detecting the timing at which the amount of the reflected light becomes small. However, the application of black paint on the rotating body is typically performed manually, which thereby tends to cause uneven application or the like. Therefore, in this method, the rotational speed of the rotating body may not be accurately measured due to the uneven application of the black paint or the like.

In contrast, the measurement system 1 has the second measurement region R2 on the boss outer peripheral surface 14c that changes the amount of the reflected light L2 that reaches the rotation sensor 30 from the irradiation position P30. The second measurement region R2 includes the marking M that is processed to reflect the reflected light L2, when the irradiation position P30 is located in the second measurement region R2, in a direction different from the reflection direction of the reflected light L2, when the irradiation position P30 is located in the first measurement region R1. In this case, the reflected light L2 from the irradiation position P30 in the second measurement region R2 can be reflected in a direction different from the rotation sensor 30. As a result, the amount of the reflected light L2 that reaches the rotation sensor 30 from the irradiation position P30, when the irradiation position P30 is located in the second measurement region R2, is smaller than the amount of the reflected light L2 that reaches the rotation sensor 30 from the irradiation position P30, when the irradiation position P30 is located in the first measurement region R1. Thus, the amount of the reflected light L2 that the rotation sensor 30 receives is smaller when the marking M in the second measurement region R2 passes through the irradiation position P30 with the rotation of the rotating body 10. The rotational speed of the rotating body 10 can be measured based on this change in the amount of the reflected light L2. In the case where the rotating body 10 includes the marking M processed as described above, the rotational balance of the rotating body 10 is less likely to be disturbed compared to a case where a component for measuring the rotational speed is separately added to the rotating body 10. Furthermore, the marking M processed as described above can be formed uniformly and accurately on the boss outer peripheral surface 14c by machining. Accordingly, unlike in the case where black paint is applied manually to the rotating body 10, the risk that the rotational speed of the rotating body 10 cannot be measured accurately due to uneven application or the like can be reduced. Therefore, the above measurement system 1 is capable of accurately measuring the number of rotations of the rotating body 10 while maintaining the rotational balance of the rotating body 10.

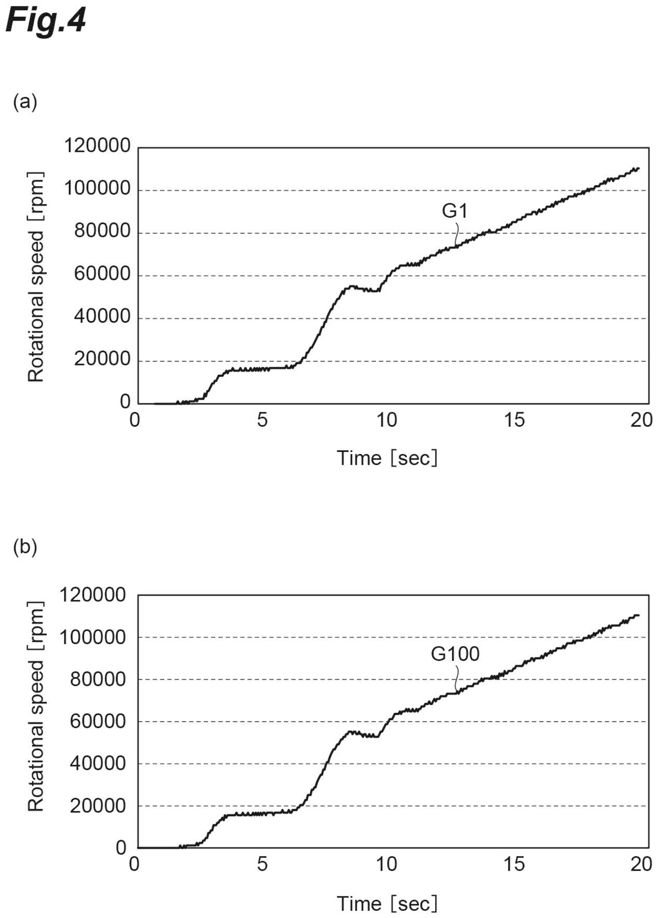

A graph G1 of FIG. 4(a) illustrates the measurement result of measuring the rotational speed of the rotating body 10 by the rotation sensor 30 in the measurement system 1. A graph G100 of FIG. 4(b) illustrates, as a reference example, the measurement result of measuring the rotational speed of the rotating body 10 by a magnetic sensor. In FIGS. 4(a) and 4(b), the vertical axis represents the rotational speed [rpm] of the rotating body 10 measured using the rotation sensor 30, and the horizontal axis represents the measurement time [sec]. As illustrated in FIGS. 4(a) and 4(b), it can be seen that the graph G1 closely matches the graph G100. Therefore, it can be seen from the graphs G1 and G100 that the rotational speed of the rotating body 10 is accurately measured using the rotation sensor 30.

As in the present embodiment, the marking M may be a textured portion provided with surface texturing to diffusely reflect the reflected light L2. In this case, the marking M can be formed on the rotating body 10 by laser processing in which the boss outer peripheral surface 14c of the rotating body 10 is irradiated with laser light. In the case where the marking M is formed on the rotating body 10 by laser processing, the rotational balance of the rotating body 10 is less likely to be disturbed compared to a case where the marking M is formed on the rotating body 10 by a cutting process that removes a portion of the boss outer peripheral surface 14c of the rotating body 10.

As in the present embodiment, the rotation sensor 30 may be a laser sensor that irradiates the irradiation position P30 with laser light as the measurement light L1. In the case where a laser sensor is used as the rotation sensor 30, the distance between the rotation sensor 30 and the rotating body 10 can be increased compared to a case where a proximity sensor is used as the rotation sensor 30. Thus, the risk of interference with other components caused by the rotation sensor 30 being brought too close to the rotating body 10 can be reduced. As a result, it is possible to avoid increased complexity in the system configuration that would otherwise be required to avoid interference between the rotation sensor 30 and other components.

As in the present embodiment, the boss outer peripheral surface 14c may be a portion of the outer surface of the first impeller 12. The first impeller 12 is typically formed of a material which can be easily processed compared to other components such as the shaft 11. Therefore, the marking M can be easily formed through processing on the first impeller 12. Furthermore, unlike the shaft 11, the first impeller 12 is a component that can be removed from the rotating body 10 and replaced, which thereby facilitates corrections and the like of the marking M. Furthermore, in the case where the marking M is formed on the first impeller 12, the influence of the marking M on the rotational balance of the rotating body 10 can be reduced compared to a case where the marking M is formed on the shaft 11. Furthermore, the first impeller 12 tends to be a portion for correcting the rotational balance of the rotating body 10, and such correction is performed by machining using the first chuck mechanism 80 and the second chuck mechanism 90. In the case where the marking M is formed on the first impeller 12, the positional relationship between a correction position of the first impeller 12 and a formation position of the marking M can be collectively detected by a machine. As a result, the correction of the first impeller 12 and the formation of the marking M can be easily performed by a machine.

As in the present embodiment, the boss outer peripheral surface 14c of the boss portion 14 may be a measurement surface irradiated with the measurement light L1. In this case, the measurement light L1 can be easily irradiated toward the boss outer peripheral surface 14c from a direction intersecting the rotational axis CL. Furthermore, since the boss portion 14 has a lower risk of damage during high-speed rotation than the hub portion 15 where the plurality of blade portions 16 are formed, the marking M can be reliably maintained on the boss outer peripheral surface 14c.

As in the present embodiment, the marking M may be formed on the boss outer peripheral surface 14c at a position spaced apart from the boundary between the boss portion 14 and the hub portion 15. In this case, the risk of the plurality of blade portions 16 formed on the hub portion 15 being erroneously irradiated with the measurement light L1 from the rotation sensor 30 can be reduced. Furthermore, in this case, even when the rotation sensor 30 is disposed at a position close to the boss outer peripheral surface 14c, the risk of the rotation sensor 30 interfering with the plurality of blade portions 16 of the hub portion 15 can be reduced.

The measurement system and the rotating body of the present disclosure are not limited to the embodiments described above. The specific aspects of the measurement system and the rotating body of the present disclosure may be modified as appropriate without departing from the spirit of the scope of the claims.

### <Variation 1>

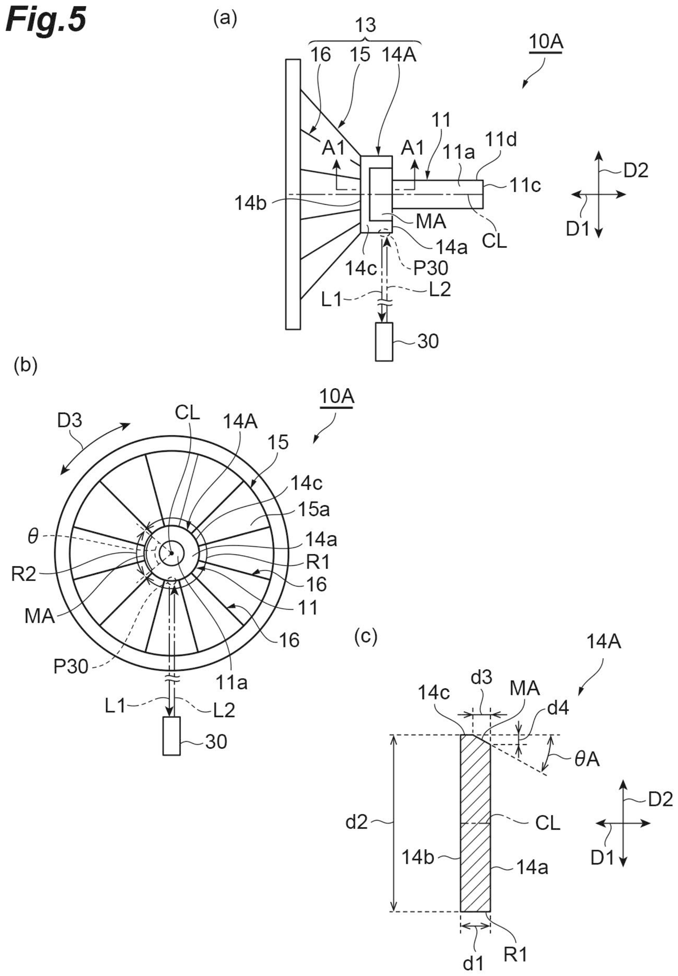

FIGS. 5(a) to 5(c) illustrate a rotating body 10A of Variation 1. A marking MA is formed in the second measurement region R2 of the rotating body 10A in place of the marking M described above. The marking MA is an inclined surface formed by chamfering the boss outer peripheral surface 14c of a boss portion 14A by a machine. The marking MA is formed on the boss outer peripheral surface 14c, for example, in the same range and shape as that of the marking M described above.

As illustrated in FIG. 5(c), the marking MA formed as an inclined surface extends in a direction different from the axial direction D1 in which the first measurement region R1 extends in a cross-section including the rotational axis CL. Specifically, the marking MA extends in a direction inclined with respect to the rotational axis CL so as to approach the rotational axis CL toward the first boss end surface 14a. As a result, the normal direction of the marking MA is inclined with respect to the normal direction of the first measurement region R1. That is, the normal direction of the marking MA is inclined with respect to the radial direction D2 which is the optical axis direction of the rotation sensor 30.

An inclination angle θA of an extending direction of the marking MA with respect to the axial direction D1 of the rotational axis CL is, for example, 5 degrees to 30 degrees. The inclination angle θA may, for example, be 5 degrees to 10 degrees. In FIG. 5(c), for example, a width d1 of the boss portion 14A in the axial direction D1 is 3 mm, and a diameter d2 of the boss portion 14A is 20 mm. A width d3 of the marking MA in the axial direction D1 is, for example, 0.9 mm to 1.7 mm. A depth d4 of the marking MA in the radial direction D2 from the boss outer peripheral surface 14c is, for example, 0.5 mm to 1 mm.

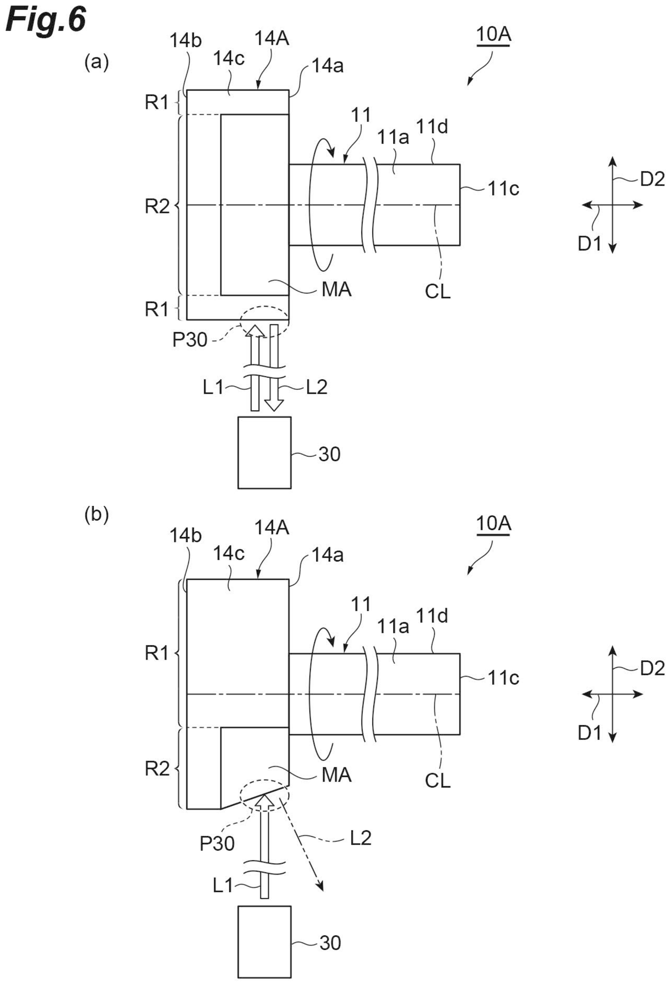

As illustrated in FIG. 6(a), when the irradiation position P30 is located in the first measurement region R1 formed as the smooth boss outer peripheral surface 14c, the normal direction of the first measurement region R1 at the irradiation position P30 coincides with the optical axis direction of the rotation sensor 30. Accordingly, the measurement light L1 irradiated onto the irradiation position P30 in the first measurement region R1 from the rotation sensor 30 along the radial direction D2 is reflected from the irradiation position P30 toward the rotation sensor 30 along the radial direction D2. That is, the reflection direction of the reflected light L2 in the first measurement region R1 coincides with the irradiation direction of the measurement light L1 from the rotation sensor 30.

In contrast, as illustrated in FIG. 6(b), when the irradiation position P30 is located in the second measurement region R2 in which the marking MA is formed, the normal direction of the marking MA is different from the optical axis direction of the rotation sensor 30 along the radial direction D2, so that most of the reflected light L2 reflected by the marking MA is reflected in a direction different from the radial direction D2 in which the rotation sensor 30 is located. As a result, the amount of the reflected light L2 that reaches the rotation sensor 30 from the irradiation position P30, when the irradiation position P30 is located in the second measurement region R2, is smaller than the amount of the reflected light L2 that reaches the rotation sensor 30 from the irradiation position P30, when the irradiation position P30 is located in the first measurement region R1. Thus, the marking MA reduces the amount of the reflected light L2 that reaches the rotation sensor 30.

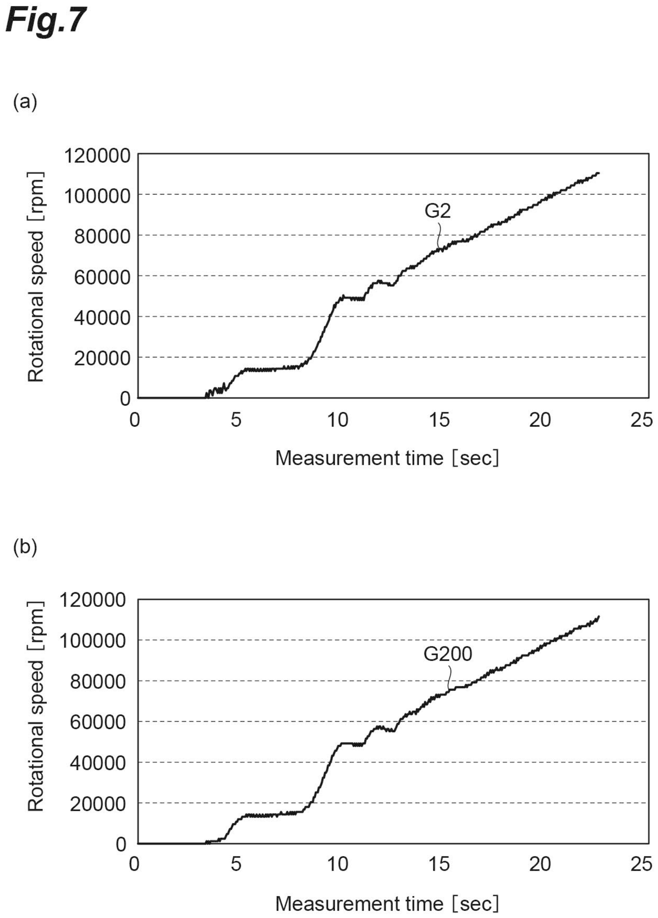

Therefore, the rotating body 10A in which the marking MA is formed produces effects similar to those of the rotating body 10 in which the marking M is formed. Furthermore, in the rotating body 10A, the marking MA is an inclined surface that extends in a direction different from the axial direction D1 in which the first measurement region R1 extends, which thereby enables the marking M to be easily formed on the rotating body 10 by a simple operation of chamfering a portion of the boss outer peripheral surface 14c of the rotating body 10. A graph G2 of FIG. 7(a) illustrates the measurement result of measuring the rotational speed of the rotating body 10A by the rotation sensor 30. A graph G200 of FIG. 7(b) illustrates, as a reference example, the measurement result of measuring the rotational speed of the rotating body 10A by a magnetic sensor. As illustrated in FIGS. 7(a) and 7(b), it can be seen that the graph G2 closely matches the graph G200. Therefore, it can be seen from the graphs G2 and G200 that the rotational speed of the rotating body 10A is accurately measured using the rotation sensor 30.

### <Variation 2>

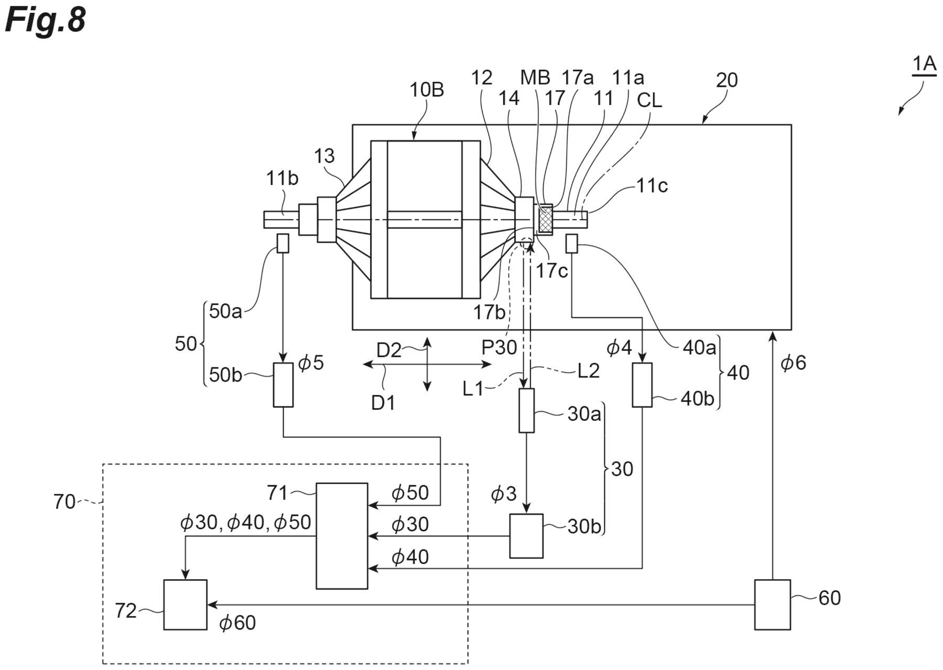

FIG. 8 illustrates a measurement system 1A that includes a rotating body 10B of Variation 2. The measurement system 1A includes the rotating body 10B in place of the rotating body 10 described above. The configuration of the measurement system 1A other than the rotating body 10B is the same as that of the measurement system 1 described above. The rotating body 10B includes a nut 17 in addition to the configuration of the rotating body 10 described above.

The nut 17 is a component for attaching the first impeller 12 to the shaft 11. The nut 17 has a cylindrical shape about the rotational axis CL. The nut 17 includes, for example, a first nut end surface 17a, a second nut end surface 17b, and a nut outer peripheral surface 17c (measurement surface). The first nut end surface 17a and the second nut end surface 17b are aligned along the axial direction D1. The shaft end surface 11c protrudes from the first nut end surface 17a. The second nut end surface 17b is in contact with the boss portion 14 in the axial direction D1. The nut outer peripheral surface 17c is an outer peripheral surface of the nut 17 extending along the circumferential direction D3. The nut outer peripheral surface 17c connects the first nut end surface 17a and the second nut end surface 17b in the axial direction D1. The nut outer peripheral surface 17c is, for example, a circumferential surface about the rotational axis CL.

In the rotating body 10B, the nut outer peripheral surface 17c is formed as a measurement surface that is irradiated with the measurement light L1 for measuring the rotational speed of the rotating body 10. The rotation sensor 30 is disposed at a position facing the nut outer peripheral surface 17c in the radial direction D2. The rotation sensor 30 irradiates the measurement light L1 toward the nut outer peripheral surface 17c. A marking MB is formed on the nut outer peripheral surface 17c. The marking MB has, for example, the same configuration as the marking M described above. Even with such a configuration, effects similar to those of the embodiments described above are produced.

### <Variation 3>

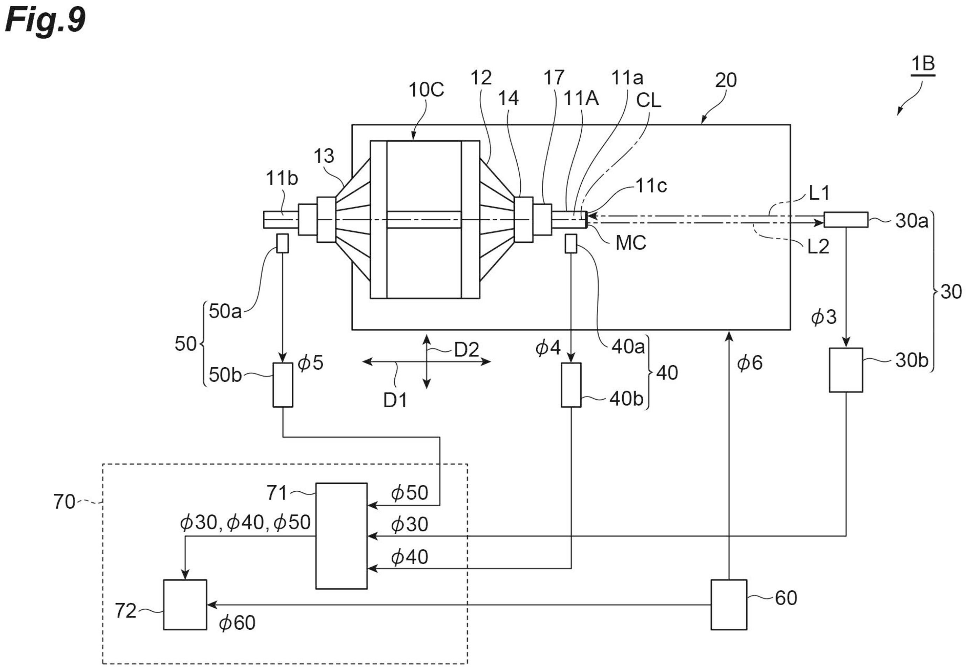

FIG. 9 illustrates a measurement system 1B that includes a rotating body 10C of Variation 3. The measurement system 1B includes the rotating body 10C in place of the rotating body 10 described above. The rotating body 10C includes the nut 17 in addition to the configuration of the rotating body 10. Furthermore, in the rotating body 10C, a marking MC is formed on the shaft end surface 11c (measurement surface). The rotation sensor 30 is disposed at a position facing the shaft end surface 11c in the axial direction D1. The rotation sensor 30 emits the measurement light L1 toward the shaft end surface 11c in the axial direction D1. In this case, the optical axis direction of the rotation sensor 30 coincides with the axial direction D1. In this configuration, taking into consideration that the first chuck mechanism 80 illustrated in FIG. 1 is disposed, a through hole through which the measurement light L1 extend may be formed in the first chuck mechanism 80 so that the measurement light L1 from the rotation sensor 30 is not blocked by the first chuck mechanism 80.

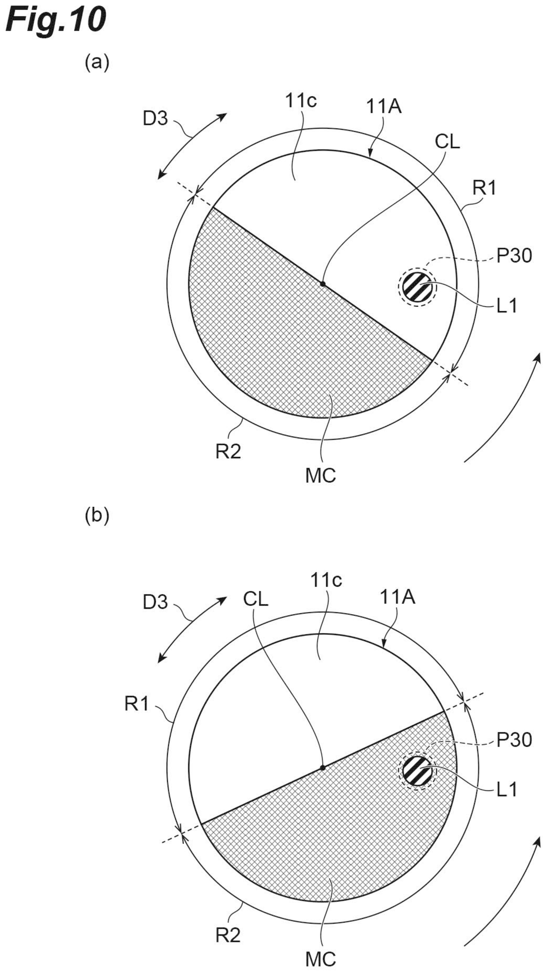

As illustrated in FIG. 10(a), when the shaft end surface 11c is viewed in the axial direction D1 in which the rotational axis CL extends, the shaft end surface 11c includes the first measurement region R1 and the second measurement region R2 adjacent to each other along the circumferential direction D3. The first measurement region R1 is the region on one side of the shaft end surface 11c when the shaft end surface 11c is cut in half in the plane including the rotational axis CL. The second measurement region R2 is the region on the other side of the shaft end surface 11c when the shaft end surface 11c is cut in half in the plane including the rotational axis CL. The marking MC formed in the second measurement region R2 has, for example, the same configuration as the marking M described above.

As illustrated in FIG. 10(a), when the irradiation position P30 is located in the first measurement region R1, the measurement light L1 irradiated onto the irradiation position P30 in the first measurement region R1 from the rotation sensor 30 along the axial direction D1 is reflected from the irradiation position P30 toward the rotation sensor 30 along the axial direction D1. In contrast, as illustrated in FIG. 10(b), when the irradiation position P30 is located in the second measurement region R2 in which the marking MC is formed, most of the reflected light L2 reflected by the marking MC is reflected in directions different from the axial direction D1 in which the rotation sensor 30 is located. Therefore, the amount of the reflected light L2 that reaches the rotation sensor 30 from the irradiation position P30, when the irradiation position P30 is located in the second measurement region R2, is smaller than the amount of the reflected light L2 that reaches the rotation sensor 30 from the irradiation position P30, when the irradiation position P30 is located in the first measurement region R1. Even with such a configuration, effects similar to those of the embodiments described above are produced.

### <Variation 4>

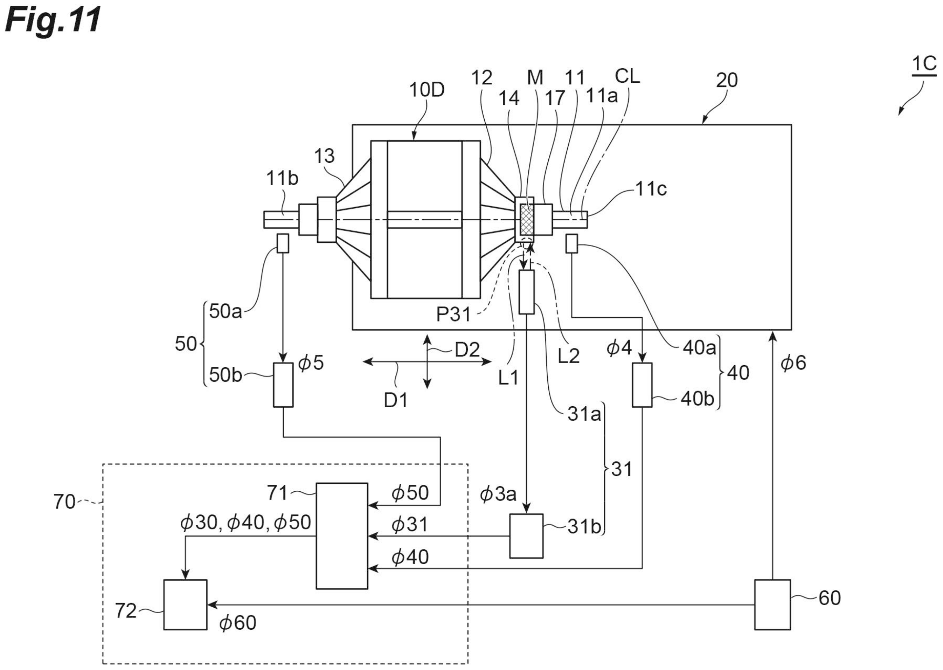

FIG. 11 illustrates a measurement system 1C that includes a rotating body 10D of Variation 4. The measurement system 1C includes a rotating body 10D in place of the rotating body 10 described above. The rotating body 10D includes the nut 17 similarly to the rotating body 10B. In the rotating body 10D, the marking M is formed on the boss portion 14 similarly to the rotating body 10. Furthermore, the measurement system 1C includes a rotation sensor 31 (optical sensor) in place of the rotation sensor 30 described above.

The rotation sensor 31 is a proximity sensor that is disposed at a position close to the boss portion 14 of the rotating body 10D. The distance in the radial direction D2 from the rotation sensor 31 to an irradiation position P31, that is, a detection distance of the rotation sensor 31 is, for example, in the range of greater than 0 µm to 60 mm. The detection distance of the rotation sensor 31 may, for example, be in the range of 250 µm to 60 mm. The rotation sensor 31 is required to be located closer to the rotating body 10D than the rotation sensor 30 as the laser sensor described above even in a case where a long-distance focusing lens is provided. Accordingly, the measurement system 1C requires a mechanism that prevents the rotation sensor 31 from interfering with other components such as the first impeller 12 and the first chuck mechanism 80 (see FIG. 1).

The rotation sensor 31 may, for example, be an optical fiber sensor that emits the measurement light L1. In this case, the measurement light L1 is emitted from an optical fiber and is irradiated onto the boss portion 14 in the radial direction D2. The rotation sensor 31 includes, for example, a sensor head 31a that irradiates the irradiation position P31 with the measurement light L1 and acquires the amount of the reflected light L2 as an electrical signal φ3a, and a sensor amplifier 31b that amplifies the electrical signal φ3a of the sensor head 31a. The rotation sensor 31 transmits an electrical signal φ31 amplified by the sensor amplifier 31b to the measurement device 70 as a detection result indicating the amount of the reflected light L2. Even with such a configuration, effects similar to those of the embodiments described above are produced.

### <Appendix>

The present disclosure is [1] "a measurement system including:
a rotating body including a shaft rotatable about a rotational axis;
an optical sensor disposed at a position facing a measurement surface being a portion of an outer surface of the rotating body, the optical sensor being configured to irradiate the measurement surface with measurement light and receive reflected light of the measurement light from the measurement surface; and
a measurement device communicably connected to the optical sensor and configured to measure a rotational speed of the rotating body based on a change in a state of the reflected light reaching the optical sensor from the measurement surface,
wherein the measurement surface includes:
   a first measurement region configured to reflect the reflected light toward the optical sensor; and
   a second measurement region adjacent to the first measurement region in a circumferential direction of the rotational axis and configured to pass through an irradiation position of the measurement light on the measurement surface for each revolution of the rotating body about the rotational axis, and
   wherein the second measurement region includes a marking processed to reflect the reflected light, when the irradiation position is located in the second measurement region, in a direction different from a reflection direction of the reflected light, when the irradiation position is located in the first measurement region."

The present disclosure is [2] "the measurement system according to [1] above, wherein the marking is a textured portion provided with surface texturing to diffusely reflect reflected light."

The present disclosure is [3] "the measurement system according to [1] above, wherein the marking is an inclined surface extending in a direction different from a direction in which the first measurement region extends in a cross-section including the rotational axis."

The present disclosure is [4] "the measurement system according to any one of [1] to [3] above, wherein the optical sensor is a laser sensor configured to irradiate the irradiation position with laser light as the measurement light."

The present disclosure is [5] "the measurement system according to any one of [1] to [4] above,
wherein the rotating body further includes an impeller attached to the shaft, and
wherein the measurement surface is a portion of an outer surface of the impeller.

The present disclosure is [6] "the measurement system according to [5] above,
wherein the impeller includes:
a boss portion having a cylindrical shape and through which the shaft extends;
a hub portion extending from the boss portion along a radial direction and the circumferential direction of the rotational axis; and
a plurality of blade portions rising from the hub portion,
wherein the boss portion includes a boss outer peripheral surface extending along the circumferential direction, and
wherein the measurement surface is the boss outer peripheral surface."

The present disclosure is [7] "the measurement system according to [6] above, wherein the marking is formed on the boss outer peripheral surface at a position spaced apart from a boundary between the boss portion and the hub portion."

The present disclosure is [8] "a rotating body including a shaft rotatable about a rotational axis,
wherein a measurement surface being a portion of an outer surface of the rotating body is configured to be irradiated with measurement light from an optical sensor,
wherein the measurement surface includes:
   a first measurement region configured to reflect the measurement light toward the optical sensor; and
   a second measurement region adjacent to the first measurement region in a circumferential direction of the rotational axis and configured to pass through an irradiation position of the measurement light on the measurement surface for each revolution of the rotating body about the rotational axis, and
   wherein the second measurement region includes a marking processed to reflect the reflected light, when the irradiation position is located in the second measurement region, in a direction different from a reflection direction of the reflected light, when the irradiation position is located in the first measurement region."

### Reference Signs List

1, 1A, 1B, 1C Measurement system
10, 10A, 10B, 10C, 10D Rotating body
11 Shaft
11c Shaft end surface (measurement surface)
14, 14A Boss portion
14c Boss outer peripheral surface (measurement surface)
15 Hub portion
16 Blade portion
17c Nut outer peripheral surface (measurement surface)
30, 31 Rotation sensor (optical sensor)
70 Measurement device
CL Rotational axis
D2 Radial direction
D3 Circumferential direction
L1 Measurement light
L2 Reflected light
M, MA, MB, MC Marking
P30, P31 Irradiation position
R1 First measurement region
R2 Second measurement region

## Claims

1. A measurement system comprising:
a rotating body including a shaft rotatable about a rotational axis;
an optical sensor disposed at a position facing a measurement surface being a portion of an outer surface of the rotating body, the optical sensor being configured to irradiate the measurement surface with measurement light and receive reflected light of the measurement light from the measurement surface; and
a measurement device communicably connected to the optical sensor and configured to measure a rotational speed of the rotating body based on a change in a state of the reflected light reaching the optical sensor from the measurement surface,
wherein the measurement surface includes:
a first measurement region configured to reflect the reflected light toward the optical sensor; and
a second measurement region adjacent to the first measurement region in a circumferential direction of the rotational axis and configured to pass through an irradiation position of the measurement light on the measurement surface for each revolution of the rotating body about the rotational axis, and
wherein the second measurement region includes a marking processed to reflect the reflected light, when the irradiation position is located in the second measurement region, in a direction different from a reflection direction of the reflected light, when the irradiation position is located in the first measurement region.

2. The measurement system according to claim 1, wherein the marking is a textured portion provided with surface texturing to diffusely reflect reflected light.

3. The measurement system according to claim 1, wherein the marking is an inclined surface extending in a direction different from a direction in which the first measurement region extends in a cross-section including the rotational axis.

4. The measurement system according to any one of claims 1 to 3, wherein the optical sensor is a laser sensor configured to irradiate the irradiation position with laser light as the measurement light.

5. The measurement system according to any one of claims 1 to 3,
wherein the rotating body further includes an impeller attached to the shaft, and
wherein the measurement surface is a portion of an outer surface of the impeller.

6. The measurement system according to claim 5,
wherein the impeller includes:
a boss portion having a cylindrical shape and through which the shaft extends;
a hub portion extending from the boss portion along a radial direction and the circumferential direction of the rotational axis; and
a plurality of blade portions rising from the hub portion,
wherein the boss portion includes a boss outer peripheral surface extending along the circumferential direction, and
wherein the measurement surface is the boss outer peripheral surface.

7. The measurement system according to claim 6, wherein the marking is formed on the boss outer peripheral surface at a position spaced apart from a boundary between the boss portion and the hub portion.

8. A rotating body including a shaft rotatable about a rotational axis,
wherein a measurement surface being a portion of an outer surface of the rotating body is configured to be irradiated with measurement light from an optical sensor,
wherein the measurement surface includes:
a first measurement region configured to reflect the measurement light toward the optical sensor; and
a second measurement region adjacent to the first measurement region in a circumferential direction of the rotational axis and configured to pass through an irradiation position of the measurement light on the measurement surface for each revolution of the rotating body about the rotational axis, and
wherein the second measurement region includes a marking processed to reflect the reflected light, when the irradiation position is located in the second measurement region, in a direction different from a reflection direction of the reflected light, when the irradiation position is located in the first measurement region.
